# EUROPÄISCHE PATENTSCHRIFT

(11) **EP 2 577 781 B1**
(45) Veröffentlichungstag und Bekanntmachung des Hinweises auf die Patenterteilung: **30.08.2017**
(21) Anmeldenummer: 11724595.1
(22) Anmeldetag: 27.05.2011
(51) Int. Cl.: H01M 6/40, H01M 10/04

(54) **BATTERIE, VERFAHREN ZUR HERSTELLUNG EINER BATTERIE UND SCHALTUNG MIT EINER BATTERIE**
BATTERY, METHOD FOR PRODUCING A BATTERY AND CIRCUIT COMPRISING A BATTERY
BATTERIE, PROCÉDÉ DE FABRICATION D'UNE BATTERIE ET CIRCUIT POURVU D'UNE BATTERIE

(30) Priorität: 31.05.2010 DE 102010023092
(43) Veröffentlichungstag der Anmeldung: 10.04.2013
(73) Patentinhaber: VARTA Microbattery GmbH, 73479 Ellwangen (DE)
(72) Erfinder: WENDLER, Michael, 73765 Neuhausen (DE); KREBS, Martin, 73494 Rosenberg (DE)
(74) Vertreter: Patentanwaltskanzlei Cartagena
(86) Internationale Anmeldenummer: PCT/EP2011/058740
(87) Internationale Veröffentlichungsnummer: WO 2011/151263

(56) Entgegenhaltungen:
- WO-A1-00/11743
- WO-A1-2009/108185
- WO-A2-2005/106990
- JP-A- 2003 308 852

## Beschreibung

Die Erfindung betrifft eine Batterie, insbesondere eine gedruckte Batterie, ein Verfahren zur Herstellung einer solchen Batterie sowie eine Schaltung mit einer solchen Batterie.

Flache Batterien sind in den unterschiedlichsten Ausführungsformen bekannt. Unter anderem sind dünne, flexible Batterien bekannt, die einen mehrschichtigen Aufbau aufweisen, bei denen flächige Elektroden in Form von Elektrodenschichten als Stapel übereinander angeordnet sind. Übereinander angeordnete, entgegengesetzt gepolte Elektrodenschichten sind dabei in der Regel durch eine dazwischenliegende Separatorschicht getrennt und bilden mit dieser einen Elektroden-Separator-Stapel. In herkömmlicher Bauweise können solche Batterien einen Batterieträger aufweisen, auf dem als Stromableiter Stromkollektoren, die mit Anschlusskontakten verbunden sind, aufgebracht sind. Die Elektrodenschichten befinden sich dabei in unmittelbarem Kontakt mit den Stromkollektoren und sind über die Anschlusskontakte mit einem Verbraucher verbunden. Die Stromableiter können entweder als separate Stromableiterschicht auf dem Batterieträger angeordnet sein oder gemeinsam mit den Elektrodenschichten eine Elektroden-Ableiterschicht bilden.

Nachteilig an einer solchen Batterie ist, dass die Stromableiter der einzelnen Elektrodenschichten mit ihren Anschlusskontakten nicht in der gleichen Schichtebene angeordnet sind. Stattdessen ist für jede der Elektroden eine eigene Stromableiterschicht bzw. Elektroden-Ableiterschicht vorgesehen, so dass im Ergebnis auch die Anschlusskontakte für die Elektroden in unterschiedlichen Schichten angeordnet sind. Die Anordnung der Anschlusskontakte in einer Schichtebene wäre jedoch für eine zuverlässige Verbindung bzw. Kontaktierung der Batterie, beispielsweise mit anderen Teilen einer Schaltung, vorteilhaft. Um eine Batterie mit stapelförmig übereinander angeordneten Elektroden in nur einer Schichtebene kontaktieren zu können, sind zusätzliche Maßnahmen wie beispielsweise zusätzliche Kontaktelemente erforderlich, mit denen ein Kontakt auf eine andere Schichtebene geführt werden kann. Dazu müssen in der Regel jedoch zusätzliche Bauteile in die Batterie eingebracht werden.

Die WO 00/11743 A1 befasst sich mit dem Problem der Selbstendladung von gedruckten Batterien. Diesem Problem wird begegnet, indem eine Batterie in einem Zustand gelagert wird, in dem eine der beiden entgegengesetzt gepolten Elektroden noch nicht über einen ionenleitfähigen Separator mit der anderen Elektrode verbunden ist. Vielmehr wird die Verbindung erst unmittelbar vor Inbetriebnahme der Batterie hergestellt, indem zunächst eine Schutzfolie vom Separator entfernt wird und dann durch einen Faltvorgang die bisher nicht mit dem Separator verbundene Elektrode mit diesem kontaktiert wird.

Eine Batterie, bei der die Anschlusskontakte in einer Schichtebene angeordnet sind, ist in der WO 2006/105966 beschrieben. Bei dieser Batterie sind die Elektrodenschichten allerdings nicht stapelartig sondern nebeneinander angeordnet und die Stromableiter mit den Anschlusskontakten in einer Schichtebene darunter. Die Elektroden sind durch einen ionenleitfähigen Elektrolyten miteinander verbunden, der in einer Schichtebene über den Elektroden sowie zwischen den Elektroden in der gleichen Schichtebene wie diese angeordnet ist. Batterien, bei denen sich die Elektrodenschichten nebeneinander auf einem Substrat befinden, haben jedoch den Nachteil, dass sie einen vergleichsweise hohen Innenwiderstand aufweisen, in der Regel auch verbunden mit einer geringen Belastbarkeit der Batterie. Ferner benötigen diese Batterien, beispielsweise auf einer Basisplatte einer Schaltung, eine deutlich größere Fläche als eine Batterie mit übereinander angeordneten Elektroden aus gleichen Elektrodenmaterialien.

Der vorliegenden Erfindung liegt die Aufgabe zugrunde, eine Batterie, insbesondere eine dünne flexible Batterie, bereitzustellen, bei der Probleme des Standes der Technik vermieden werden, die insbesondere ohne zusätzliche Maßnahmen wie Durchkontaktierungen oder zusätzliche Kontaktelemente zuverlässig und kostengünstig mit anderen Teilen einer Schaltung verbunden werden kann und idealerweise einen geringen Flächenbedarf hat. Aufgabe der Erfindung ist es ferner ein Verfahren bereitzustellen, mit dem einfach und kostengünstig mit möglichst kurzer Taktzeit eine solche Batterie hergestellt werden kann.

Gelöst wird diese Aufgabe durch die Batterie mit den Merkmalen des Anspruchs 1 sowie das Verfahren mit den Merkmalen des Anspruchs 6. Bevorzugte Ausführungsformen der erfindungsgemäßen Batterie sind in den abhängigen Ansprüchen 2 bis 5 angegeben. Bevorzugte Ausführungsformen des erfindungsgemäßen Verfahrens finden sich in den abhängigen Ansprüchen 7 bis 9. Weiterhin ist auch die Schaltung mit den Merkmalen des Anspruchs 10 Gegenstand der vorliegenden Erfindung.

Der Wortlaut sämtlicher Ansprüche wird hiermit durch Bezugnahme zum Inhalt dieser Beschreibung gemacht. Manche der nachfolgend beschriebenen Merkmale und Eigenschaften treffen sowohl auf die Batterie als auch auf das Verfahren zur Herstellung einer solchen Batterie als auch auf die Schaltung zu. Die Merkmale werden teilweise nur einmal beschrieben, sollen jedoch davon unabhängig für die Batterie, das Verfahren und die Schaltung gelten.

Eine erfindungsgemäße Batterie weist einen schichtweisen Aufbau auf. Sie umfasst mindestens einen Elektroden-Separator-Stapel mit einer Elektrodenschicht aus positivem Elektrodenmaterial, einer Elektrodenschicht aus negativem Elektrodenmaterial und einer ionenleitfähigen Separatorschicht dazwischen. Diese hat zum einen die Aufgabe, die Elektrodenschichten räumlich voneinander zu trennen, so dass kein Kurzschluss entsteht, und zum anderen zwischen den entgegengesetzt gepolten Elektrodenschichten eine ionenleitfähige Verbindung bereitzustellen. Weiterhin umfasst die erfindungsgemäße Batterie einen Stromableiter für jede der Elektrodenschichten des Elektroden-Separator-Stapels und ein elektrisch nichtleitendes Substrat, das um einen Rand des Elektroden-Separator-Stapels herum umgeschlagen ist, so dass es die Elektrodenschichten zumindest teilweise abdeckt. Das elektrisch nichtleitende Substrat dient bei der erfindungsgemäßen Batterie insbesondere als Träger bzw. als Trägersubstrat für die Stromableiter, die fest auf dem Substrat aufgebracht sein können. Aber hierzu später noch mehr.

Die Stromableiter weisen jeweils einen Stromkollektor und einen Anschlusskontakt auf. Die Stromkollektoren stehen dabei in direktem Kontakt mit dem Elektrodenmaterial der Elektrodenschichten, ihnen kommt eine "Stromsammelfunktion" zu. Über die Anschlusskontakte kann der gesammelte Strom dann abgeleitet werden. Die Anschlusskontakte sind in der Regel nicht von Elektrodenmaterial bedeckt.

Die Stromableiter können sowohl als separate Stromableiterschichten auf einer der Separatorschicht abgewandten Seite der Elektrodenschichten ausgebildet sein als auch mit den Elektrodenschichten eine gemeinsame Elektroden-Ableiterschicht bilden. Letzteres kann z.B. der Fall sein, wenn die Stromkollektoren der Stromableiter nicht durchgängig ausgebildet sind sondern als Netz oder als Gitter. Die Netz- und Gittermaschen können mit Elektrodenmaterial gefüllt sein, so dass zwischen den Elektroden- und den Stromableiterschichten keine klare Grenze mehr besteht.

Besonders zeichnet sich eine erfindungsgemäße Batterie dadurch aus, dass die Stromableiter derart auf dem elektrisch nichtleitenden Substrat angeordnet sind, dass die Anschlusskontakte in der gleichen Stromableiterschicht oder der gleichen Elektroden-Ableiterschicht, also in der gleichen Schichtebene, abgreifbar sind.

Um eine erfindungsgemäße Batterie mit anderen Teilen einer Schaltung zu verbinden, müssen die Anschlusskontakte entsprechend abgegriffen und kontaktiert werden. Dies kann bei einer erfindungsgemäßen Batterie in der gleichen Stromableiterschicht oder der gleichen Elektroden-Ableiterschicht erfolgen so dass es keiner zusätzlicher Maßnahmen wie Durchkontaktierungen oder zusätzliche Kontaktelemente bedarf.

Besonders bevorzugt handelt es sich bei einer erfindungsgemäßen Batterie um eine gedruckte Batterie, also um eine Batterie, die mindestens ein Funktionsteil aufweist, das durch Drucken aufgebracht worden ist. Funktionsteile sind die beispielsweise die Stromableiter, die Elektrodenschichten oder die Separatorschicht. In bevorzugten Ausführungsformen der erfindungsgemäßen Batterie sind alle diese Funktionsteile gedruckt. So können z.B. druckfähige Pasten entsprechender Zusammensetzung zur Herstellung einer Separator- und einer Elektrodenschicht dienen.

Die Paste für die Separatorschicht kann z.B. ein Lösungsmittel, mindestens ein Leitsalz, das in dem Lösungsmittel gelöst ist, sowie Partikel und/oder Fasern, die in dem Lösungsmittel bei Raumtemperatur zumindest nahezu, vorzugsweise vollständig, unlöslich und elektrisch nicht leitend sind, aufweisen. Das mindestens eine Leitsalz übernimmt im Separator die Funktion des Ionenleiters, die Partikel und/oder die Fasern die Funktion des Abstandshalters.

Die erfindungsgemäße Batterie kann grundsätzlich wiederaufladbar oder nicht wiederaufladbar ausgebildet sein. Bevorzugt handelt es sich bei der erfindungsgemäßen Batterie z.B. um eine Zink-Braunstein-Batterie, eine Nickel-Metallhydrid-Batterie oder um eine Lithium-Ionen-Batterie. Entsprechende positive und negative Elektrodenmaterialien für diese elektrochemischen Systeme sind dem Fachmann bekannt. Als Anodenmaterial für die negative Elektrode kann z.B. eine druckfähige Zinkpaste dienen, die Zinkpulver, einen geeigneten Binder und ein geeignetes Lösungsmittel umfasst. Zur Herstellung der Kathode (positive Elektrode) kann z.B. eine druckfähige Paste eingesetzt werden, die Braunstein (MnO₂), Ruß und/oder Graphit als Leitmaterial sowie einen geeigneten Binder und ein geeignetes Lösungsmittel aufweist.

Wie bereits erwähnt, dient bei einer erfindungsgemäßen Batterie das elektrisch nichtleitende Substrat insbesondere als Träger bzw. als Trägersubstrat für die Stromableiter. Auch diese können durch Druck auf das Substrat aufgebracht werden Die Stromableiter der negativen Elektrode sind bevorzugt auf Basis von Silber, Kupfer und/oder Graphit ausgebildet, die Stromableiter der positiven Elektrode bevorzugt auf Basis von Silber, Nickel und/oder Graphit. Geeignet sind insbesondere Silberleitpasten. Alternativ können auch elektrisch leitende Folien wie Metallfolien als Stromkollektoren und/oder als Anschlusskontakte verwendet werden. Auch das Aufbringen dünner Metallschichten als Stromableiter auf das elektrisch nichtleitende Substrat, z.B. durch ein PVD- oder CVD-Verfahren, ist denkbar.

Die Stromkollektoren der Stromableiter einer erfindungsgemäßen Batterie sind in einer bevorzugten Ausgestaltungen flächig ausgebildet und erstrecken sich entsprechend über einen Flächenbereich. In einer besonders bevorzugten Ausführungsform kontaktiert der Stromkollektor die Elektrodenschicht vollflächig. Wie bereits angedeutet, kann er aber auch gitterförmig ausgebildet sein, z.B. aus einer Vielzahl von Leiterbahnen bestehen, die gitterförmig angeordnet sind und die Elektrodenschicht netzartig kontaktieren. Die Anschlusskontakte sind bevorzugt als bandförmige Leiterbahnen ausgebildet.

Ein Stromableiter ist bevorzugt einstückig ausgebildet, kann gegebenenfalls aber auch mehrteilig ausgebildet sein. So könne z.B. die Anschlusskontakte aus anderen Materialien bestehen als die Stromkollektoren.

Vorzugsweise sind die Anschlusskontakte, die in der gleichen Stromableiterschicht oder der gleichen Elektroden-Ableiterschicht abgreifbar sind, in dieser Schicht nebeneinander angeordnet. In einer bevorzugten Ausgestaltungen weisen die Anschlusskontakte jeweils ein freies Ende auf, welches für einen Abgriff und zur Verbindung und Kontaktierung mit anderen Teilen einer Schaltung oder eines sonstigen Verbrauchers ausgebildet ist.

Das nichtleitende Substrat ist entlang mindestens einer Knicklinie, vorzugsweise genau einer Knicklinie, um den Rand des Elektroden-Separator-Stapel herum umgeschlagen, wobei mindestens einer der Anschlusskontakte derart auf dem Substrat angeordnet ist, dass er diese mindestens eine Knicklinie kreuzt. Die mindestens eine Knicklinie teilt das Substrat in zwei oder mehr Bereiche, vorzugsweise in zwei Hälften. Die Stromkollektoren sind dabei bevorzugt auf unterschiedlichen Seiten der Knicklinie, also in unterschiedlichen Bereichen oder Hälften, auf dem Substrat angeordnet. Der mindestens eine Anschlusskontakt, der die Knicklinie kreuzt, verläuft auf dem Substrat dementsprechend von dem mit ihm verbundenen Stromkollektor aus dem einen Bereich in den anderen Bereich. Diese Anordnung des Anschlusskontaktes auf dem Substrat ermöglicht es, den Anschlusskontakt auf dem Substrat in die Schichtebene eines Anschlusskontaktes einer entgegengesetzt gepolten Elektrodenschicht zu führen, so dass das beschriebene Abgreifen der Anschlusskontakte in der gleichen Stromableiterschicht oder der gleichen Elektroden-Ableiterschicht ermöglicht wird.

Ist das Substrat z.B. entlang einer Falt- oder Falzlinie um den Rand des Elektroden-Separator-Stapels umgeschlagen oder umgeklappt, so dass das Substrat die übereinander angeordneten Elektrodenschichten mit der Separatorschicht dazwischen und den Stromableitern umschließt, so kann es nicht nur als Träger für die Stromableiter dienen sondern auch als Abdeckung für den Elektroden-Separator-Stapel. Entsprechend bildet das Substrat in bevorzugten Ausführungsformen ein Gehäuse aus, das den Elektroden-Separator-Stapel und die Stromkollektoren dichtend umschließt. Die Anschlusskontakte sind bevorzugt aus diesem Gehäuse herausgeführt.

In bevorzugten Ausgestaltungen umschließt das vom Substrat gebildete Gehäuse auch die Anschlusskontakte teilweise dichtend, wobei von jedem Anschlusskontakt ein Bereich zum Abgreifen freiliegt und nicht von dem Gehäuse umschlossen ist. So kann die Batterie problemlos mit anderen Teilen einer Schaltung oder mit anderen Batterien verbunden werden.

Bei dem elektrisch nichtleitenden Substrat handelt es sich bevorzugt um ein Substrat aus flexiblem Material wie eine Folie, insbesondere eine Kunststofffolie. Geeignete sind beispielsweise Folien, die für Foliengehäuse von Lithium-Ionen-Batterien oder Lithium-Polymer-Batterien Anwendung finden können.

Gegebenenfalls kann das nichtleitende Substrat mehrteilig ausgebildet sein mit einem ersten Teil und einem zweiten Teil, wobei die beiden Teile insbesondere entlang der Knicklinie miteinander verbunden sind, vorzugsweise stoffschlüssig, beispielsweise durch Kleben. Ein mehrteiliges Substrat kann beispielsweise vorteilhaft sein, wenn ein festerer und/oder stabilerer bzw. biegefesterer Batterieträger erforderlich ist, der jedoch ungeeignet wäre, den Rand des Elektroden-Separator-Stapels zu umschlagen. Mit einem zweiten, biegeweichen und flexiblen Material, können hingegen die Anforderungen an eine solche Batterie erfüllt werden.

Eine erfindungsgemäße Batterie ist im Vergleich zu vergleichbaren Batterien aus dem Stand der Technik kostengünstiger herstellbar, da das Durchkontaktieren bzw. ein zusätzliches Kontaktelement entfällt, und benötigt im Vergleich zu einer Batterie mit nebeneinander angeordneten Elektroden weniger Fläche auf einer Basisplatte für eine Schaltung.

Bei einer erfindungsgemäßen Batterie handelt es sich bevorzugt um eine sehr flache Batterie mit einer Dicke von in der Regel weniger als 2 mm, vorzugsweise weniger als 1 mm, insbesondere zwischen 0,5 mm und 0,75 mm. Diese Angaben umfassen die Höhe des Elektroden-Separator-Stapels, die Dicke des um den Stapel herumgeschlagenen Trägers sowie die Dicke der vorhandenen Ableiter- oder Elektroden-Ableiterschichten.

Erfindungsgemäße Batterien lassen sich insbesondere nach einem erfindungsgemäßen Verfahren herstellen. Dieses umfasst stets die folgenden Schritte:
In einem ersten Schritt werden Stromableiter jeweils mit einem Stromkollektor und einem Anschlusskontakt nebeneinander auf einem flächigen, elektrisch nichtleitenden Substrat, das entlang einer Knicklinie in eine erste und eine zweite Teilfläche unterteilt oder unterteilbar ist, aufgebracht. Dabei wird einer der Stromkollektoren innerhalb der ersten Teilfläche aufgebracht und einer der Stromkollektoren innerhalb der zweiten Teilfläche. Mindestens einer der Anschlusskontakte wird derart auf dem Substrat aufgebracht, dass er die Knicklinie kreuzt. Er wird also zum Teil auf der ersten Teilfläche und zum Teil auf der zweiten Teilfläche aufgebracht. Der Begriff Teilfläche bezeichnet dabei einen Bereich der Substratfläche, vorzugsweise in etwa eine Hälfte der Substratfläche. Es ist vorteilhaft, wenn die erste und die zweite Teilfläche zwei im wesentlichen symmetrische Flächen bzw. Bereiche bilden.

Die Knicklinie ist in bevorzugten Ausführungsformen zunächst eine gedachte Linie oder ein Bereich um eine gedachte Linie herum. Natürlich kann die Knicklinie aber auch strukturell auf dem Substrat ausgebildet sein, beispielsweise als Schwächungslinie, entlang der das Umklappen oder Umschlagen des Substrats bewirkt werden kann. Bei der Schwächungslinie kann es sich z.B. um eine Perforationsnaht handeln. Grundsätzlich ist sie derart ausgebildet, dass das Umklappen oder Umschlagen zuverlässig und lagegenau erfolgen kann.

Entlang dieser Knicklinie wird anschließend das Substrat umgeschlagen oder umgeklappt oder gefalzt bzw. gefaltet, wobei zuvor allerdings noch eine Elektrodenschicht aus positivem Elektrodenmaterial, eine Elektrodenschicht aus negativem Elektrodenmaterial und eine ionenleitfähige Separatorschicht auf dem Substrat angeordnet werden.

Die Elektrodenschicht aus dem positivem Elektrodenmaterial, die Elektrodenschicht aus dem negativen Elektrodenmaterial und die ionenleitfähige Separatorschicht werden dabei bevorzugt so auf dem Substrat angeordnet, dass sich die Separatorschicht spätestens nach dem Umschlagen des Substrats zwischen den Elektrodenschichten befindet. Die Stromkollektoren sind nach dem Umschlagen nicht mehr nebeneinander sondern in zwei Ebenen stapelartig übereinander angeordnet. Eine der Elektrodenschichten kann somit nach dem Umschlagen mit dem auf der ersten Teilfläche aufgebrachten Stromkollektor in direktem Kontakt stehen, die andere mit dem auf der zweiten Teilfläche aufgebrachten Stromkollektor.

Insbesondere aber liegt nach dem Umschlagen des Substrats ein Teil des mindestens einen die Knicklinie kreuzenden Anschlusskontaktes in einer Ebene mit dem auf der ersten Teilfläche aufgebrachten Stromkollektor und ein anderer Teil dieses Anschlusskontaktes in einer Ebene mit dem auf der zweiten Teilfläche aufgebrachten Stromkollektor. So wird es ermöglicht, dass die Anschlusskontakte der Stromkollektoren bei einer erfindungsgemäßen Batterie in der gleichen Stromableiterschicht oder der gleichen Elektroden-Ableiterschicht, also in der gleichen Schichtebene, abgreifbar sind.

Es ist möglich, die Elektrodenschicht aus positivem Elektrodenmaterial, die Elektrodenschicht aus negativem Elektrodenmaterial und die ionenleitfähige Separatorschicht als fertigen Elektroden-Separator-Stapel auf dem Substrat anzuordnen. Es ist aber auch möglich, die Schichten sequentiell auf das Substrat aufzubringen. So können z.B. zuerst die Elektrodenschichten auf das Substrat mit den Stromableitern aufgebracht werden, beispielsweise durch Druck, und anschließend die Separatorschicht, beispielsweise ebenfalls durch Druck.

Bevorzugt werden mindestens eine positive Elektrode und mindestens eine negative Elektrode nebeneinander auf die Stromableitern und/oder das Substrat aufgebracht. Dabei wird eine Elektrodenschicht im Bereich der ersten Teilfläche aufgebracht und eine entgegengesetzt gepolte Elektrodenschicht daneben im Bereich der zweiten Teilfläche. Es kann aber auch eine Reihe von Elektrodenschichten in der ersten Teilfläche angeordnet werden und eine Reihe von entgegengesetzt gepolten Elektrodenschichten daneben in der zweiten Teilfläche.

Nach dem Aufbringen der Elektroden kann die Separatorschicht nur im Bereich einer der beiden Teilflächen auf einer der Elektrodenschichten und dem angrenzenden Substrat aufgetragen werden, so dass diese Elektrodenschicht teilweise oder vollflächig von der Separatorschicht überdeckt wird. Denkbar ist aber auch, den Separator auf beiden Teilflächen aufzutragen, entweder jeweils über die gesamten Elektrodenschichten oder nur jeweils nur über einen Teil einer Elektrodenschicht. Wichtig ist, dass die Separatorschicht so aufgetragen wird, dass nach dem Umschlagen entgegengesetzt gepolte Elektrodenschichten sicher räumlich voneinander getrennt sind.

In einer bevorzugten Ausführungsform deckt das Substrat nach dem Umschlagen die Elektrodenschichten mit den zugehörigen Stromableitern zumindest teilweise, vorzugsweise vollständig, ab. Beim Umschlagen wird also die eine Hälfte des Substrats mit den gegebenenfalls auf ihr angeordneten Komponenten bzw. funktionalen Schichten auf die andere Hälfte mit den gegebenenfalls darauf befindlichen Komponenten geklappt. Dabei ist die zweite Teilfläche des Substrats bevorzugt so ausgebildet, dass die Anschlusskontakte zumindest in einem Bereich, der für einen späteren Abgriff vorgesehen ist, nach dem Falten oder Umschlagen nicht überdeckt werden, sondern frei liegen. Dazu kann die zweite Teilfläche entweder im Bereich der Anschlusskontakte entsprechende Ausnehmungen aufweisen, oder auch abgeschnitten sein.

In einer Weiterbildung der Erfindung wird die Batterie in einem weiteren Verfahrensschritt versiegelt, vorzugsweise mittels eines Kleberahmens, insbesondere mittels eines umlaufenden Kleberahmens, der zwischen den beiden Teilflächen um den Elektroden-Separator-Stapel herum eingebracht wird. Der Kleberahmen kann mittels einer Klebstoffraupe, vorzugsweise durch Heißklebstoff oder eine Folie, gebildet werden. Bevorzugt wird eine thermoaktivierbare Folie verwendet, insbesondere eine Schmelzfolie. Es kann aber auch eine selbstklebende Folie als Kleberahmen eingesetzt werden.

Ein umlaufender Kleberahmen, also ein vollständig geschlossener Rahmen in Umfangsrichtung, hat sich als besonders vorteilhaft erwiesen. Denkbar ist aber auch, einen geöffneten Rahmen zu verwenden, wobei die Öffnung am Rand des Elektroden-Separator-Stapels angeordnet ist, der zur Knicklinie orientiert ist. In diesem Fall bildet das umgeschlagene Substrat an dieser Seite der Batterie die Abdichtung.

In einer besonders bevorzugten Ausgestaltung wird durch das Versiegeln aus dem Substrat ein Gehäuse gebildet, das den Elektroden-Separator-Stapel und die Stromkollektoren dichtend umschließt. Die Anschlusskontakte bleiben jedoch bevorzugt zumindest in ihrem Abgriffsbereich frei.

Wie bereits angesprochen können die Funktionsteile einer erfindungsgemäßen Batterie durch Druck hergestellt werden. In einer bevorzugten Ausgestaltung werden mindestens ein Stromableiter und/oder mindestens eine Elektrodenschicht und/oder die Separatorschicht durch Siebdruck hergestellt. Werden sämtliche Funktionsteile der Batterie durch Drucken aufgebracht, kann die Herstellung der Batterie zu großen Teilen im Rahmen eines Druckprozesses erfolgen, bei dem lediglich die einzelnen Schichten nacheinander aufgebracht werden müssen. Ein Handling der Batterie zwischen dem Aufbringen der einzelnen Funktionsschichten ist nicht zwingend erforderlich. Die damit verbundenen Vorteile sind offensichtlich.

Eine erfindungsgemäße Schaltung weist eine vorbeschriebene Batterie auf. Bevorzugt weist eine solche Schaltung eine Batterie auf, die nach einem vorbeschriebenen Verfahren hergestellt ist.

Für die Herstellung einer erfindungsgemäßen Schaltung wird bevorzugt die Batterie auf ein Basissubstrat aufgebracht und dort fixiert. Danach können die Anschlusskontakte der Batterie mit anderen Teilen der Schaltung auf dem Basissubstrat elektrisch kontaktiert werden. Der elektrische Kontakt kann beispielsweise durch Klemmung, Krimpen, Löten, mittels eines Federelements oder durch Aufbringen einer Leitpaste oder eines Leitklebstoffs hergestellt werden. Die Fixierung der Batterie auf dem Basissubstrat kann beispielsweise durch Einlaminieren oder Verkleben erzeugt werden. Es ist auch möglich, mehrere Batterien miteinander zu verschalten, beispielsweise in einer Reihenschaltung.

Diese und weitere Merkmale gehen außer aus den Ansprüchen auch aus der nun folgenden Beschreibung der in den Zeichnungen dargestellten bevorzugten Ausführungsformen hervor, wobei die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

Ausführungsformen der Erfindung sind in den Zeichnungen schematisch dargestellt und werden im Folgenden näher erläutert. In den Zeichnungen zeigen:
- Fig. 1: eine Draufsicht auf ein Substrat im ungefalteten Zustand mit darauf aufgebrachten Stromableitern mit Stromkollektoren und Anschlusskontakten,
- Fig. 2: eine erfindungsgemäße Batterie in Schnittdarstellung entlang der Schnittebene A-A',
- Fig. 3: eine erfindungsgemäße Batterie in Schnittdarstellung entlang der Schnittebene B-B', und
- Fig. 4: eine erfindungsgemäße Batterie in Schnittdarstellung entlang der Schnittebene C-C'.

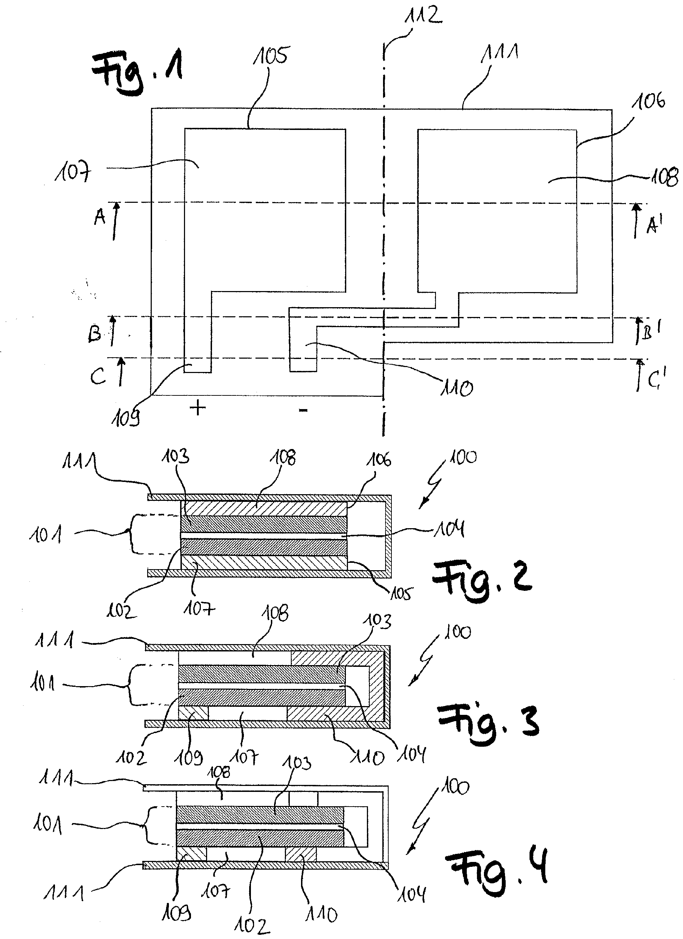

**Fig. 1** zeigt eine Draufsicht auf ein Substrat 111 im ungefalteten Zustand mit darauf aufgebrachten Stromableitern 105 und 106. Diese umfassen die Stromkollektoren 107 und 108 sowie die zugehörigen Anschlusskontakte 109 und 110. In dieser Darstellung ist die Knicklinie 112, welche die Substratfläche in zwei Teilflächen unterteilt, gut zu erkennen.

Der Stromkollektor 107 ist in der linken Teilfläche auf dem Substrat 101 angeordnet und mit dem Anschlusskontakt 109 verbunden und bildet in diesem Ausführungsbeispiel die untere Stromableiterschicht bzw. den Stromableiter 105, der in einem späteren Verfahrensschritt mit der positiven Elektrode 102, siehe Fig. 2 bis Fig. 4, verbunden wird. Dabei verläuft der Anschlusskontakt 109 in diesem gezeigten Ausführungsbeispiel gerade.

Der andere Stromkollektor 108 befindet sich auf der rechten Teilfläche und ist mit einem Abgriffsbereich des Anschlusskontakt 110 in diesem gezeigten Ausführungsbeispiel über eine S-förmig verlaufende Leiterbahn verbunden, welche die Knicklinie 112 kreuzt. Dieser Stromableiter 106 wird in diesem Ausführungsbeispiel in einem späteren Verfahrensschritt mit der negativen Elektrode 103, siehe ebenfalls Fig. 2 bis 4, verbunden.

Es hat sich als besonders vorteilhaft erwiesen, wenn die Elektrodenschichten 102, 103 kongruent zueinander ausgebildet werden. Vorteilhaft kommen z.B. rechteckige oder quadratische Elektroden zum Einsatz. Das Substrat 111 ist in dem gezeigten Ausführungsbeispiel im wesentlichen symmetrisch ausgebildet, bis auf den unteren Bereich der rechten Teilfläche. Dort ist das Substrat 111 abgeschnitten, damit nach dem Falten oder Umschlagen des Substrats 111, bei dem die rechte Teilfläche auf die linke Teilfläche geklappt wird, die Anschlusskontakte 109 und 110 in ihrem Abgriffsbereich nicht von dem Substrat 111 überdeckt werden, sondern frei liegen.

In **Fig. 2** ist zum besseren Verständnis ein Schnitt durch eine erfindungsgemäße fertiggestellte Batterie 100 dargestellt entlang der Schnittebene A-A'. Die Schnittdarstellung entspricht dabei nicht einem Schnitt durch das flächig ausgebreitete Substrat 111 aus Fig. 1, sondern einer bereits fertiggestellten Batterie 100. Die Positionen der Schnittebenen A-A', B-B' und C-C' sind nur zum besseren Verständnis in Fig. 1 dargestellt.

Aus **Fig. 2** ist der Schichtaufbau der Batterie 100 mit einem zwischen dem Substrat angeordneten Elektroden-Separator-Stapel 101 ersichtlich. Auf dem Substrat 111, genauer auf der ersten Teilfläche des Substrats 111, ist der Stromableiter 105 angeordnet, oberhalb dessen sich eine positive Elektrode 102, eine Separatorschicht 104 und eine negative Elektrode 103 befinden, welche den Elektroden-Separator-Stapel 101 bilden. Die Separatorschicht 104 ist in dieser Darstellung nur schematisch dargestellt und sollte vorteilhaft sich nach außen über die Elektrodenschichten 102, 103 hinaus erstrecken, um eine zuverlässige räumliche Trennung der Elektrodenschichten 102,103 zu gewährleisten.

Auf der oberen Elektrodenschicht 103 ist der Stromkollektor 108 angeordnet, der genau wie der Stromkollektor 107 in diesem Ausführungsbeispiel flächig ausgebildet ist. Die rechte Teilfläche des Substrats 111 bildet die oberste Schicht der Batterie, also die Deckschicht. Ein Kleberahmen, durch den eine erfindungsgemäße Batterie versiegelt werden kann, ist nicht dargestellt. Im Falle einer versiegelten Batterie wäre die Batterie links von dem Elektroden-Substrat-Stapel 101 ebenfalls dicht verschlossen, und zwar durch den Kleberahmen.

Die **Fig. 3 und 4** zeigen ebenfalls jeweils in Schnittdarstellung die erfindungsgemäße Batterie 100, jedoch entlang der Schnittebene B-B' bzw. C-C'. In Fig. 3 ist gut zuerkennen, wie der Anschlusskontakt 110 auf dem Substrat 111 innen am Falz bzw. am Umschlag nach unten geführt wird in die Stromableiterschicht 105.

## Patentansprüche

1. Batterie (100) mit Schichtaufbau, insbesondere gedruckte Batterie mit Schichtaufbau, umfassend
- einen Elektroden-Separator-Stapel (101) mit einer Elektrodenschicht aus positivem Elektrodenmaterial (102), einer Elektrodenschicht aus negativem Elektrodenmaterial (103) und einer ionenleitfähigen Separatorschicht (104) dazwischen,
- einen Stromableiter (105, 106) für jede der Elektrodenschichten (102, 103), jeweils mit einem in direktem Kontakt mit dem Elektrodenmaterial der Elektrodenschichten (102, 103) stehenden Stromkollektor (107, 108) und einem Anschlusskontakt (109, 110), wobei die Stromableiter (105, 106) als separate Stromableiterschichten auf einer der Separatorschicht (104) abgewandten Seite der Elektrodenschichten (102, 103) ausgebildet sind und/oder mit den Elektrodenschichten (102, 103) eine gemeinsame Elektroden-Ableiterschicht bilden, sowie
- ein elektrisch nichtleitendes Substrat (111), das um einen Rand des Elektroden-Separator-Stapels (101) herum umgeschlagen ist, so dass es die Elektrodenschichten (102, 103) zumindest teilweise abdeckt,
wobei das elektrisch nichtleitende Substrat (111) als Träger für die Stromableiter (105, 106) dient und diese auf dem Substrat (111) derart angeordnet sind, dass die Anschlusskontakte (109, 110) in der gleichen Stromableiterschicht oder der gleichen Elektroden-Ableiterschicht abgreifbar sind,
**dadurch gekennzeichnet, dass** das nichtleitende Substrat (111) entlang einer Knicklinie (112) um den Rand des Elektroden-Separator-Stapels (101) herum umgeschlagen ist und einer der Anschlusskontakte (110) derart auf dem Substrat angeordnet ist, dass der Anschlusskontakt (110) diese Knicklinie (112) kreuzt.

2. Batterie (100) nach Anspruch 1, **dadurch gekennzeichnet, dass** die Stromkollektoren (107, 108) auf unterschiedlichen Seiten der Knicklinie (112) auf dem Substrat (111) angeordnet sind.

3. Batterie (100) nach einem der vorgenannten Ansprüche, **dadurch gekennzeichnet, dass** das Substrat (111) ein Gehäuse bildet, das den Elektroden-Separator-Stapel (101) und die Stromkollektoren (107, 108) dichtend umschließt.

4. Batterie (100) nach Anspruch 3, **dadurch gekennzeichnet, dass** das vom Substrat (111) gebildete Gehäuse auch die Anschlusskontakte (109, 110) teilweise dichtend umschließt, wobei von jedem Anschlusskontakt (109, 110) ein Bereich zum Abgreifen freiliegt und nicht von dem Gehäuse umschlossen ist.

5. Batterie nach einem der vorgenannten Ansprüche, **dadurch gekennzeichnet, dass** das Substrat (111) ein flexibles Material ist, vorzugsweise eine Folie, insbesondere eine Kunststofffolie.

6. Verfahren zur Herstellung einer Batterie (100), insbesondere nach einem der Ansprüche 1 bis 5, mit den Schritten:
a. Aufbringen von Stromableitern (105, 106) jeweils mit einem Stromkollektor (107, 108) und einem Anschlusskontakt (109, 110) nebeneinander auf einem flächigen, nichtleitenden Substrat (111), das entlang einer Knicklinie (112) in eine erste und eine zweite Teilfläche unterteilbar ist,
b. Anordnen einer Elektrodenschicht aus positivem Elektrodenmaterial (102), einer Elektrodenschicht aus negativem Elektrodenmaterial (103) und einer ionenleitfähigen Separatorschicht (104) auf dem Substrat (111), und
c. Umschlagen des Substrats (111) entlang der Knicklinie (112),
wobei einer der Stromkollektoren (107) innerhalb der ersten Teilfläche und einer der Stromkollektoren (108) innerhalb der zweiten Teilfläche aufgebracht wird und mindestens einer der Anschlusskontakte (110) derart auf dem Substrat (111) aufgebracht wird, dass er die Knicklinie (112) kreuzt,
wobei sich nach dem Umschlagen des Substrats (111) die Separatorschicht (104) zwischen den Elektrodenschichten (102, 103) befindet, die Stromkollektoren (107, 108) nicht mehr nebeneinander sondern stapelartig übereinander angeordnet sind, die eine Elektrodenschicht (102) mit dem auf der ersten Teilfläche aufgebrachten Stromkollektor (107) in direktem Kontakt steht und die andere Elektrodenschicht (103) mit dem auf der zweiten Teilfläche aufgebrachten Stromkollektor (108), und
wobei nach dem Umschlagen des Substrats (111) ein Teil eines die Knicklinie (112) kreuzenden Anschlusskontaktes (110) in einer Ebene mit dem auf der ersten Teilfläche aufgebrachten Stromkollektor (107) liegt und ein anderer Teil in einer Ebene mit dem auf der zweiten Teilfläche aufgebrachten Stromkollektor (108).

7. Verfahren nach Anspruch 6, **dadurch gekennzeichnet, dass** das Substrat (111) nach dem Umschlagen die Elektrodenschichten (102, 103) mit den zugehörigen Stromableitern (105, 106) zumindest teilweise abdeckt.

8. Verfahren nach Anspruch 6 oder 7, **dadurch gekennzeichnet, dass** in einem weiteren Schritt die Batterie (100) versiegelt wird, vorzugsweise mittels eines Kleberahmens, insbesondere mittels eines umlaufenden Kleberahmens.

9. Verfahren nach Anspruch 8, **dadurch gekennzeichnet, dass** durch das Versiegeln aus dem Substrat (111) ein Gehäuse gebildet wird, das den Elektroden-Separator-Stapel (101) und die Stromkollektoren (107, 108) dichtend umschließt.

10. Schaltung, **dadurch gekennzeichnet, dass** sie eine Batterie nach einem der Ansprüche 1 bis 5 aufweist.

## Claims

1. Battery (100) with a layer structure, in particular a printed battery with a layer structure, comprising
- an electrode-separator stack (101) with an electrode layer of positive electrode material (102), an electrode layer of negative electrode material (103) and an ion-conducting separator layer (104) in between,
- a current conductor (105, 106) for each of the electrode layers (102, 103), in each case with a current collector (107, 108), which is in direct contact with the electrode material of the electrode layers (102, 103), and a connecting contact (109, 110), wherein the current conductors (105, 106) are designed as separate current conductor layers on a side of the electrode layers (102, 103) that is facing away from the separator layer (104) and/or form a common electrode-current conductor layer together with the electrode layers (102, 103), and
- an electrically non-conductive substrate (111), which is wrapped around an edge of the electrode-separator stack (101), so that it at least partially covers the electrode layers (102, 103),
wherein the electrically non-conductive substrate (111) is used as a carrier for the current conductors (105, 106) and said current conductors are arranged on the substrate (111) in such a way that the connecting contacts (109, 110) can be tapped in the same current conductor layer or the same electrode-current conductor layer,
**characterized in that** the non-conductive substrate (111) is wrapped around the edge of the electrode-separator stack (101) along a crease line (112) and one of the connecting contacts (110) is arranged on the substrate in such a way that the connecting contact (110) crosses this crease line (112).

2. Battery (100) according to Claim 1, **characterized in that** the current collectors (107, 108) are arranged on the substrate (111) on different sides of the crease line (112).

3. Battery (100) according to one of the preceding claims, **characterized in that** the substrate (111) forms a housing which surrounds the electrode-separator stack (101) and the current collectors (107, 108) in a sealing manner.

4. Battery (100) according to Claim 3, **characterized in that** the housing formed by the substrate (111) also partially encloses the connecting contacts (109, 110) in a sealing manner, wherein a region of each connecting contact (109, 110) for tapping is exposed and not enclosed by the housing.

5. Battery according to one of the preceding claims, **characterized in that** the substrate (111) is a flexible material, preferably a film, in particular a film of plastic.

6. Method for producing a battery (100), in particular according to one of Claims 1 to 5, with the steps of:
a. applying current conductors (105, 106), in each case with a current collector (107, 108) and a connecting contact (109, 110), next to one another to a sheet-like, non-conductive substrate (111), which can be divided along a crease line (112) into a first and a second subarea,
b. arranging an electrode layer of positive electrode material (102), an electrode layer of negative electrode material (103) and an ion-conductive separator layer (104) on the substrate (111), and
c. wrapping the substrate (111) along the crease line (112),
wherein one of the current collectors (107) is applied within the first subarea and one of the current collectors (108) is applied within the second subarea and at least one of the connecting contacts (110) is applied to the substrate (111) in such a way that it crosses the crease line (112), wherein, after the wrapping around of the substrate (111), the separator layer (104) is located between the electrode layers (102, 103), the current collectors (107, 108) are no longer arranged next to one another but one on top of the other in the manner of a stack, the one electrode layer (102) is in direct contact with the current collector (107) applied to the first subarea and the other electrode layer (103) is in direct contact with the current collector (108) applied to the second subarea, and
wherein, after the wrapping around of the substrate (111), one part of a connecting contact (110) that crosses the crease line (112) lies in a plane with the current collector (107) applied to the first subarea and another part lies in a plane with the current collector (108) applied to the second subarea.

7. Method according to Claim 6, **characterized in that**, after wrapping around, the substrate (111) at least partially covers the electrode layers (102, 103) with the associated current conductors (105, 106).

8. Method according to Claim 6 or 7, **characterized in that** in a further step the battery (100) is sealed, preferably by means of a sealing frame, in particular by means of a running-around sealing frame.

9. Method according to Claim 8, **characterized in that** the sealing has the effect that from the substrate (111) there is formed a housing which encloses the electrode-separator stack (101) and the current collectors (107, 108) in a sealing manner.

10. Circuit, **characterized in that** it has a battery according to one of Claims 1 to 5.

## Revendications

1. Batterie (100) à structure stratifiée, en particulier batterie imprimée à structure stratifiée, comprenant :
un empilement (101) d'électrodes et de séparateurs doté d'une couche d'électrode en matériau positif d'électrode (102) et d'une couche d'électrode en matériau négatif d'électrode (103) entre lesquelles est disposée une couche de séparation (104) apte à conduire les ions,
un évacuateur de courant (105, 106) pour chacune des couches d'électrode (102, 103), chacun doté d'un collecteur de courant (107, 108) en contact direct avec le matériau d'électrode des couches d'électrode (102, 103) et un contact de raccordement (109, 110),
les évacuateurs de courant (105, 106) étant configurés comme couches distinctes d'évacuateur de courant disposées sur un côté des couches d'électrode (102, 103) non tourné vers la couche de séparation (104) et/ou comme couche d'évacuateur et d'électrode commune avec les couches d'électrode (102, 103), et
un substrat (111) électriquement non conducteur, rabattu autour d'un bord de l'empilement (101) d'électrodes et de séparateurs de manière à recouvrir au moins en partie les couches d'électrode (102, 103),
le substrat (111) électriquement non conducteur servant de support pour les évacuateurs de courant (105, 106) et ces derniers étant disposés sur le substrat (111) de telle sorte que les contacts de raccordement (109, 110) puissent être raccordés dans la même couche d'évacuateur de courant ou dans la même couche d'évacuateur d'électrode,
**caractérisée en ce que**
le substrat non conducteur (111) est rabattu autour du bord de l'empilement (101) d'électrodes et de séparateurs le long d'une ligne de pliage (112) et
**en ce que** l'un des contacts de raccordement (110) est disposé sur le substrat de telle sorte que le contact de raccordement (110) croise cette ligne de pliage (112).

2. Batterie (100) selon la revendication 1, **caractérisée en ce que** les collecteurs de courant (107, 108) sont disposés sur le substrat (111) sur des côtés différents de la ligne de pliage (112).

3. Batterie (100) selon l'une des revendications précédentes, **caractérisée en ce que** le substrat (111) forme un boîtier qui entoure de manière étanche l'empilement (101) d'électrodes et de séparateurs et le collecteur de courant (107, 108).

4. Batterie (100) selon la revendication 3, **caractérisée en ce que** le boîtier formé par le substrat (111) entoure également de manière étanche les contacts de raccordement (109, 110), une partie de sortie de chaque contact de raccordement (109, 110) étant libre et non entourée par le boîtier.

5. Batterie (100) selon l'une des revendications précédentes, **caractérisée en ce que** le substrat (111) est un matériau flexible, de préférence une feuille et en particulier une feuille de matière synthétique.

6. Procédé de fabrication d'une batterie (100), en particulier selon l'une des revendications 1 à 5, le procédé comportant les étapes qui consistent à :
a. appliquer des évacuateurs de courant (105, 106) présentant chacun un collecteur de courant (107, 108) et un contact de raccordement (109, 110) les uns à côté des autres sur un substrat non conducteur plat (111) qui peut être divisé en une première et une deuxième surface partielle le long d'une ligne de pliage (112),
b. placer sur le substrat (111) une couche d'électrode en matériau positif d'électrode (102), une couche d'électrode en matériau négatif d'électrode (103) et une couche de séparation (104) conduisant les ions et
c. rabattre le substrat (111) autour de la ligne de pliage (112),
l'un des collecteurs de courant (107) étant appliqué à l'intérieur de la première surface partielle et l'un des collecteurs de courant (108) à l'intérieur de la deuxième surface partielle et au moins l'un des contacts de raccordement (110) étant appliqué sur le substrat (111) de manière à croiser la ligne de pliage (112),
la couche de séparation (104) étant située entre les couches d'électrode (102, 103) après le rabattement du substrat (111), les collecteurs de courant (107, 108) n'étant plus disposés les uns à côté des autres mais en empilement les uns au-dessus des autres, une des couches d'électrode (102) étant en contact direct avec le collecteur de courant (107) appliqué sur la première surface partielle et l'autre couche d'électrode (103) avec le collecteur de courant (108) appliqué sur la deuxième surface partielle et
après le rabattement du substrat (111), une partie du contact de raccordement (110) qui croise la ligne de pliage (112) est située dans un plan commun avec le collecteur de courant (107) appliqué sur la première surface partielle et une autre partie du plan avec le collecteur de courant (108) appliqué sur la deuxième surface partielle.

7. Procédé selon la revendication 6, **caractérisé en ce qu'**après le rabattement, le substrat (111) recouvre au moins en partie les couches d'électrode (102, 103) et les conducteurs de courant (105, 106) qui leur sont associés.

8. Procédé selon les revendications 6 ou 7, **caractérisé en ce que** dans une autre étape, la batterie (100) est scellée, de préférence au moyen d'un encadrement collé et en particulier au moyen d'un encadrement périphérique collé.

9. Procédé selon la revendication 8, **caractérisé en ce que** le scellage forme à partir du substrat (111) un boîtier qui entoure de manière étanche l'empilement (101) d'électrode et de séparateurs et les collecteurs de courant (107, 108).

10. Circuit **caractérisé en ce qu'**il présente une batterie selon l'une des revendications 1 à 5.
